# EUROPEAN PATENT SPECIFICATION

(11) **EP 4 353 519 B1**
(45) Date of publication and mention of the grant of the patent: **02.12.2026**
(21) Application number: 23200381.4
(22) Date of filing: 28.09.2023
(51) Int. Cl.: B60L 53/16, B60L 55/00, B60L 58/14, B60L 1/00, B60L 53/30

(54) **POWER ADAPTER AND METHOD THEREFOR, ELECTRIC VEHICLE AND METHOD THEREFOR**
LEISTUNGSADAPTER UND VERFAHREN DAFÜR, ELEKTROFAHRZEUG UND VERFAHREN DAFÜR
ADAPTATEUR D'ALIMENTATION ET PROCÉDÉ ASSOCIÉ, VÉHICULE ÉLECTRIQUE ET PROCÉDÉ ASSOCIÉ

(30) Priority: 11.10.2022 CN 202211243625
(43) Date of publication of application: 17.04.2024
(73) Proprietor: Bayerische Motoren Werke Aktiengesellschaft, 80809 München (DE)
(72) Inventor: Ewald, Alexander, 81241 München (DE); Mayet, Johannes, 82487 Oberammergau (DE); Huang, Sven, Peking, 100021 (CN)

(56) References cited:
- EP-A1- 3 511 193
- EP-A1- 3 744 553
- CN-A- 109 017 396
- US-A1- 2015 217 656
- US-A1- 2022 203 852

## Description

### TECHNICAL FIELD

The present disclosure relates to the technical field of electric vehicles, and in particular to a power adapter, an electric vehicle, a method for the power adapter, and a method for the electric vehicle.

### BACKGROUND ART

An electric vehicle is a vehicle powered by a vehicle power supply. Electric energy may be stored in a battery pack of the electric vehicle, and the electric energy may be transferred from the battery pack to a motor and a power transmission system by means of an electric governor, thus driving the vehicle to run. The electric vehicle may be provided with one or more charging interfaces. For example, the electric vehicle may include an AC charging interface and a DC charging interface, wherein the AC charging interface may be called as an AC slow charging interface, and the DC charging interface may be called as a DC fast charging interface.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

US20150217656A1 describes systems, apparatus, and methods to transfer energy between an energy storage device at an electrified vehicle and an AC or DC external load such as an electric grid, appliance or power tool. A portable EVETA can engage an EV charge inlet couple an EV, and can provide an AC outlet, a grid interface and a DC connector for coupling external loads. An EVETA can be used at a remote construction site or campsite to power high current equipment, obviating the need to transport an electric generator. An EVETA can be configured for data and control communication with the EV to coordinate energy transfer. An EVETA can receive a predetermined ESD state of charge limit so that the transfer process can be terminated to preserve sufficient charge for EV return to a desired destination. A human machine interface enables user input reception and information display.

EP3744553A1 describes a control system and method for discharge control of an electric vehicle. The control system for discharge control of an electric vehicle comprises: a bidirectional charger configured to be connected with a battery of the electric vehicle and to output battery power through a discharge gun; and a battery management system connected with the bidirectional charger, the battery management system being configured to determine the type of the discharge gun based on a connection confirm signal from a circuit connected with the discharge gun, and the type of the discharge gun being a type of a vehicle-to-load discharge gun or a type of a vehicle-to-vehicle discharge gun. The bidirectional charger is configured to determine an output capacity during a discharge process as a minimum value of its own output capacity, a state of charge and a maximum rating value of a cable connected with the discharge gun.

US20220203852A1 describes a power conversion device configured to execute power conversion between a vehicle and an external power supply or an external load includes a DC connector, a charging port, a power supply port, a bidirectional power conversion circuit, a switching circuit configured to execute switching to choose whether to electrically connect the power conversion circuit and the charging port or electrically connect the power conversion circuit and the power supply port, and a control circuit configured to control the power conversion circuit and the switching circuit to selectively execute a charging operation or a power supply operation.

### SUMMARY OF THE INVENTION

According to an aspect of the present disclosure, a power adapter is provided for converting DC power from an electric vehicle to AC power to supply power to an electrical load. The power adapter includes: an adapter plug for coupling a DC charging interface of the electric vehicle to obtain the DC power from a battery pack of the electric vehicle; an adapter socket for coupling the electrical load to supply the AC power to the electrical load; a housing defining the adapter plug and the adapter socket such that the power adapter forms an integrated structure; a locking assembly including a snap-on structure for mechanically locking the adapter plug to the DC charging interface when the adapter plug is coupled to the DC charging interface; and an adapter circuitry electrically connected between the adapter plug and the adapter socket. The adapter circuitry includes: a DC-AC converter configured to convert the DC power to the AC power; a first resistor and a first switch connected in series between a connection confirmation terminal CC2 and an earthing terminal PE of the adapter circuitry; and an adapter controller configured to i) close the first switch when the adapter plug is mechanically locked to the DC charging interface to generate a first triggering signal at the connection confirmation terminal CC2, the first triggering signal to be detected by the electric, vehicle to indicate a discharging mode to the electric vehicle, and to ii) open the first switch when the adapter plug is unlocked from the DC charging interface to generate a second triggering signal at the connection confirmation terminal CC2, the second triggering signal to be detected by the electric vehicle to cause the electric vehicle to stop supplying the DC power to the power adapter, wherein the locking assembly further comprises an unlocking button coupling with the snap-on structure such that the snap-on structure unlocks the adapter plug from the DC charging interface when the unlocking button is pressed, wherein the unlocking button, when pressed, causes a third triggering signal to be generated, the third triggering signal to be detected by the adapter controller to cause the adapter controller to generate a signal for opening the first switch, and wherein the adapter controller is configured to start timing upon detection of the third triggering signal and generate a signal for opening the first switch after a preset time period.

According to another aspect of the present disclosure, an electric vehicle is provided, including: a battery pack; a DC charging interface for coupling the battery pack and the adapter plug of the power adapter described above, to supply DC power from the battery pack to the adapter plug; and a vehicle controller configured to cause the battery pack to stop supplying the DC power to the power adapter in response to detecting the second triggering signal.

According to yet another aspect of the present disclosure, a method for the power adapter described above is provided, including: causing the first switch to close in response to that the adapter plug is mechanically locked to the DC charging interface, so as to generate a first triggering signal at the connection confirmation terminal CC2, the first triggering signal to be detected by the electric vehicle to indicate a discharging mode to the electric vehicle; and causing the first switch to open when the adapter plug is unlocked from the DC charging interface, to generate a second triggering signal at the connection confirmation terminal CC2, the second triggering signal to be detected by the electric vehicle to cause the electric vehicle to stop supplying the DC power to the power adapter.

According to still another aspect of the present disclosure, a method for the electric vehicle described above is provided, including: causing the battery pack to stop supplying the DC power to the power adapter in response to detecting the second triggering signal.

These and other aspects of the present disclosure will be clear from the embodiments described below, and will be clarified with reference to the embodiments described below.

### BRIEF DESCRIPTION OF THE DRAWINGS

The accompanying drawings exemplarily show embodiments and form a part of the specification, and are used to explain example-implementations of the embodiments together with a written description of the specification. The embodiments shown are merely for illustrative purposes and do not limit the scope of the claims. Throughout the accompanying drawings, the similar reference numerals denote similar but not necessarily identical elements.
FIG. 1 is a schematic diagram of an application scenario of a power adapter and an electric vehicle according to an example embodiment;
FIG. 2A is a schematic structure diagram of a power adapter according to an example embodiment;
FIG. 2B is another schematic structure diagram of the power adapter in FIG. 2A according to an example embodiment;
FIG. 3 is a schematic diagram of an adapter circuitry of a power adapter according to an example embodiment; and
FIG. 4 is a schematic circuitry diagram of coupling of an electric vehicle to a power adapter according to an example embodiment.

### DETAILED DESCRIPTION OF THE EMBODIMENTS

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. As used herein, the term "plurality of" means two or more, and the term "based on" should be interpreted as "at least partially based on". Moreover, the terms "and/or" and "at least one of..." encompass any one of and all possible combinations of the listed items.

It should be understood that the term "vehicle" or other similar terms used herein generally include motor vehicles, such as passenger vehicles including sedan cars, sport utility vehicles (SUVs), buses, vans, and various commercial vehicles, include boats, ships, aircraft, or the like, and include hybrid vehicles, electric vehicles, plug-in hybrid electric vehicles, hydrogen powered vehicles, and other alternative fuel vehicles (e.g., fuels derived from sources other than petroleum).

In the scenario of travel by car, drivers or passengers may carry a variety of power consuming devices, such as cell phones, computers, music players, coffee machines, and the like. Some of the devices have their own rechargeable batteries, which allow them to maintain their battery life; while some devices do not have batteries, so they can only be operated by an external power supply. Regardless of whether or not these electrical loads have their own batteries, there may be a demand for power in the scenario of travel by car. However, due to environmental factors (for example, there is no power supply in the suburbs), the scenario of travel may not be readily rechargeable at any time.

As mentioned above, a battery pack of an electric vehicle may supply power to a motor and a power transmission system of the electric vehicle, thereby driving the vehicle to run. In the scenario of travel in an electric vehicle, the battery pack of the electric vehicle may be used to supply power to an electrical load, thus providing charging conditions for the electrical load anytime, anywhere. An AC charging interface and a DC charging interface on the electric vehicle provide channels for the electric vehicle to discharge to the outside.

For AC charging of the vehicle, an AC charging pile may be connected to the AC charging interface of the vehicle by means of a charging cable, AC (for example, 220 V AC) is boosted and rectified into high voltage DC by using an on-board charger of the electric vehicle, and then the high voltage DC is stored in the battery pack. In the process of AC charging, the conversion from AC to DC is completed by the on-board charger.

In the related art, the AC charging interface on the electric vehicle may be used to discharge to the outside for use by the electrical load. For example, by designing a power adapter for the AC charging interface, the power adapter is coupled to the AC charging interface of the electric vehicle after the electrical load is coupled to the power adapter, and by setting a discharging mode for the vehicle, power can be supplied to the electrical load by means of the AC charging interface. In the process of discharging, the on-board charger may convert the high voltage DC provided by the battery pack into AC required by the electrical load, and due to the relatively low voltage at the AC charging interface (for example, the voltage is 220 V), the design of the power adapter for the AC charging interface may be relatively simple.

As the charging technology of the electric vehicle becomes more and more mature and the desire for a higher charging speed increases, high voltage DC charging has gained favor because of its higher charging speed. Accordingly, more and more charging devices or charging facilities are available for the DC charging interfaces of the electric vehicles. For DC charging of the vehicle, a DC charging pile may be connected to the DC charging interface of the vehicle by means of a charging cable, so as to directly charge the battery pack. It can be seen that the on-board charger does not need to be involved in the DC charging process since the charging pile has converted AC into DC. It should be noted that DC charging usually has a high voltage (for example, 300 V), and its current is also heavier than that of AC charging. Therefore, for the sake of safety, it is usually necessary to confirm whether the vehicle and the charging pile meet the charging conditions, and only when the charging conditions are met will the vehicle be charged by DC. This also makes the design of the DC charging interface more complicated than that of the AC charging interface, presenting a challenge in designing the power adapter that corresponds to the DC charging interface. In addition, if the vehicle is discharged via the DC charging port, the high voltage DC output from the DC charging interface will bring more safety risks without involvement of the on-board charger. Therefore, it will be beneficial to design a power adapter suitable for the DC charging interface of the electric vehicle.

Embodiments of the present disclosure provide a power adapter, an electric vehicle, a method for the power adapter, and a method for the electric vehicle. According to the embodiments of the present disclosure, a safe and reliable power supply can be provided from the DC charging interface of the electric vehicle to the electrical load outside the vehicle.

Example embodiments of the present disclosure will be described in detail below with reference to the accompanying drawings.

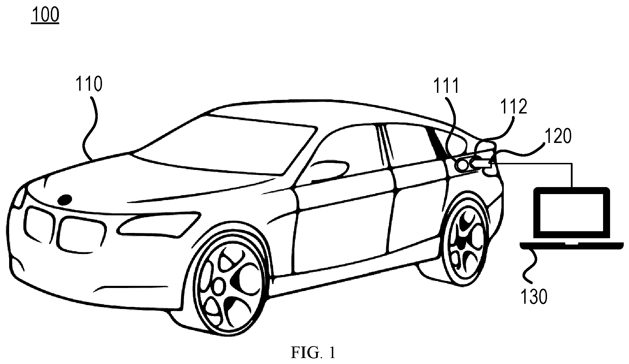

FIG. 1 is a schematic diagram of an application scenario 100 of a power adapter and an electric vehicle according to an example embodiment. The application scenario 100 includes a vehicle 110, a power adapter 120 and an electrical load 130. The vehicle 110 includes an AC charging interface 111 and a DC charging interface 112. The power adapter 120 may be coupled to the DC charging interface 112 and may also be coupled to the electrical load 130, so as to transfer DC power provided by the vehicle 110 to the electrical load 130. In an example, the electrical load 130 may be a computer, a cell phone, a lighting device, a music player, a coffee machine, or the like.

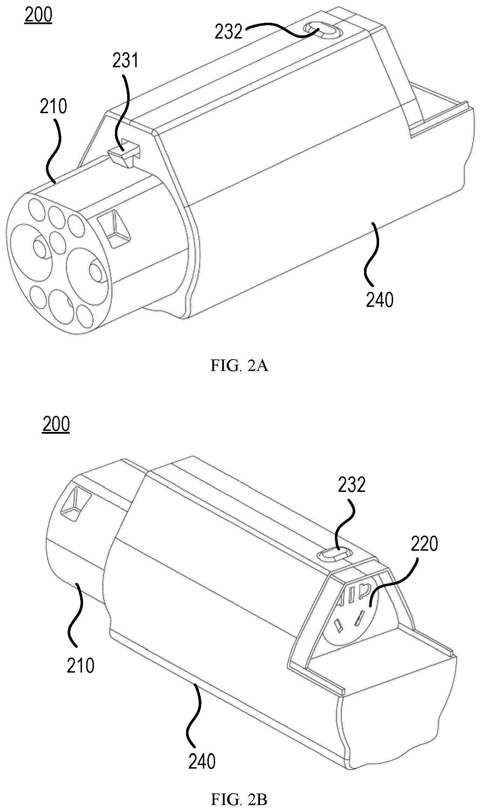

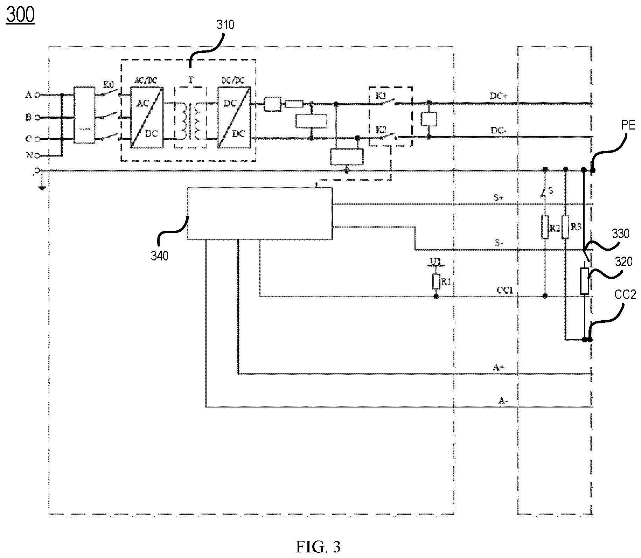

The power adapter according to the example embodiment will be described below with reference to FIGS. 2A, 2B and 3. The power adapter is configured to convert DC power from the electric vehicle to AC power to supply power to the electrical load. FIG. 2A is a schematic structure diagram of a power adapter 200 according to an example embodiment; FIG. 2B is another schematic structure diagram of the power adapter 200 in FIG. 2A according to an example embodiment; and FIG. 3 is a schematic diagram of an adapter circuitry 300 of the power adapter 200 according to an example embodiment.

Referring to FIGS. 2A, 2B and 3, the power adapter 200 includes:
an adapter plug 210 for coupling a DC charging interface of the electric vehicle to obtain the DC power from a battery pack of the electric vehicle;
an adapter socket 220 for coupling the electrical load to supply the AC power to the electrical load;
a locking assembly including a snap-on structure 231, the snap-on structure 231 being configured to mechanically lock the adapter plug 210 to the DC charging interface when the adapter plug 210 is coupled to the DC charging interface; and
an adapter circuitry 300 (shown in FIG. 3), the adapter circuitry 300 being electrically connected between the adapter plug 210 and the adapter socket 220. The adapter circuitry 300 includes:
   a DC-AC converter 310 configured to convert the DC power to the AC power;
   a first resistor 320 and a first switch 330 connected in series between a connection confirmation terminal CC2 and an earthing terminal PE of the adapter circuitry 300; and
   an adapter controller 340 configured to close the first switch 330 when the adapter plug 210 is mechanically locked to the DC charging interface to generate a first triggering signal at the connection confirmation terminal CC2, the first triggering signal to be detected by the electric vehicle to indicate a discharging mode to the electric vehicle, and configured to open the first switch 330 when the adapter plug 210 is unlocked from the DC charging interface to generate a second triggering signal at the connection confirmation terminal CC2, the second triggering signal to be detected by the electric vehicle to cause the electric vehicle to stop supplying the DC power to the power adapter 200.

As shown in FIGS. 2A and 2B, the shape of the adapter plug 210 may be designed to match the DC charging interface of the vehicle, so that the adapter plug may be successfully coupled to the DC charging interface. The shape of the adapter socket 220 may be designed to match a plug of the electrical load, so that the adapter socket may be successfully coupled to the plug of the electrical load.

As shown in FIG. 3, the left side of the adapter circuitry 300 may be coupled to a terminal of the adapter socket; and the right side of the adapter circuitry 300 may be coupled to a terminal of the adapter plug. On the right side of FIG. 3, 9 terminals of the adapter circuitry 300 are shown, namely, a DC power supply terminal DC+/DC-; an earthing terminal PE; a message interactive communication terminal S+/S-; a connection confirmation terminal CC1/CC2; and a low voltage auxiliary terminal A+/A-. Accordingly, it can be seen from FIG. 2A that the adapter plug 210 is provided with corresponding positions for the 9 terminals described above.

In an example, the adapter controller 340 may be coupled to the snap-on structure 231, and may trigger the first switch 330 to close when the snap-on structure 231 performs mechanical locking or finishes mechanical locking. The closing of the first switch 330 means that the first resistor 320 is connected between the earthing terminal PE and the connection confirmation terminal CC2, so as to generate the first triggering signal at the connection confirmation terminal CC2 (for example, causing a current change, a voltage change, or a resistance change in the connection confirmation circuit CC2). When the adapter plug 210 is coupled to the DC charging interface of the vehicle, the electric vehicle may detect the first triggering signal by means of the corresponding connection confirmation terminal CC2 of the DC charging interface. For example, a specific voltage value or voltage variation is detected, and the specific voltage value or voltage variation indicates a discharging mode of the vehicle, so that when a plug is plugged into the DC charging interface of the vehicle, the vehicle may "know" that discharging to the plug rather than charging from the plug may be performed, which is beneficial for the safety of the vehicle in supplying power to, or charging the vehicle from, the outside.

On the other hand, the adapter controller 340 is coupled to the snap-on structure 231, and trigger the first switch 330 to open when the snap-on structure 231 performs unlocking.

The opening of the first switch 330 means that the first resistor 320 is disconnected between the earthing terminal PE and the connection confirmation terminal CC2, so as to generate the second triggering signal at the connection confirmation terminal CC2 (for example, causing a current change, a voltage change, or a resistance change in the connection confirmation circuit CC2). At this time, the electric vehicle may detect the second triggering signal by means of the corresponding connection confirmation terminal CC2 of the DC charging interface. For example, a specific voltage value or voltage variation is detected, and the specific voltage value or voltage variation instructs the vehicle to stop supplying the DC power to the power adapter 200.

According to an embodiment of the present disclosure, the locking assembly may realize locking or unlocking between the power adapter and the DC charging interface of the vehicle; and further, by means of the first switch and the first resistor, when the adapter plug 210 is locked to or unlocked from the DC charging interface of the vehicle, the first triggering signal and the second triggering signal may be provided to the electric vehicle, so that the electric vehicle may "know" in a timely manner that it should enter the discharging mode or power off the power adapter in a timely manner, thereby providing a safe and reliable power supply from the DC charging interface of the electric vehicle to the electrical load outside the vehicle. For example, the vehicle may stop providing DC power in a timely manner to avoid "arc discharge" when the adapter plug is unlocked from the DC charging interface of the vehicle.

According to the invention with continued reference to FIGS. 2A and 2B, the power adapter 200 includes a housing 240, the housing 240 defining the adapter plug 210 and the adapter socket 220 such that the power adapter 200 forms an integrated structure.

Thus, both of the adapter plug 210 and the adapter socket 220 are defined by the housing 240, and the whole adapter 200 forms an integrated compact structure, which can improve the convenience of use of the power adapter 200.

According to some embodiments, the power adapter 200 may further include a cover body (not shown in the figures), and the cover body may be installed at the housing 240 on one side of the adapter socket 220 for protecting the adapter socket 220 against damage or contamination.

It will be appreciated that although the example of FIG. 2B shows one adapter socket 220 on the upper side of the rear end of the housing 240, in other examples, the power adapter 200 may further include a plurality of adapter sockets 220. Besides, the adapter socket 220 may be arranged on the lower side of the rear end of the housing 240, thereby further preventing dust or sundries from falling into the adapter socket 220.

According to some embodiments, the material of the housing 240 may be rubber.

According to some embodiments, with continued reference to FIG. 2A, the snap-on structure 231 may include a lock pin for snapping into a lock hasp disposed at the DC charging interface of the electric vehicle, thereby realizing locking between the adapter plug 210 and the DC charging interface.

According to some embodiments, the snap-on structure 231 may include a lock hasp for a lock pin arranged at the DC charging interface of the electric vehicle to be snapped therein, thereby realizing locking between the adapter plug 210 and the DC charging interface.

According to the invention the locking assembly includes an unlocking button 232, the unlocking button 232 being coupled to the snap-on structure 231 such that the snap-on structure 231 unlocks the adapter plug 210 from the DC charging interface when the unlocking button 232 is pressed. The unlocking button 232, when pressed, causes a third triggering signal to be generated, and the third triggering signal is detected by the adapter controller 340 such that the adapter controller generates a signal for opening the first switch 330.

Therefore, a pressing operation by a user enables the electric vehicle to cut off the DC power supply to the power adapter 200 while the adapter plug 210 is unlocked, which brings convenience for the user.

In the invention the adapter controller 340 starts timing upon detection of the third triggering signal, and generate a signal for opening the first switch 330 after a preset time period (for example, 5 seconds of pressing), thereby avoiding unexpected stop of power supply caused by opening of the first switch 330 at unexpected time due to a user's misoperation.

According to some embodiments, the power adapter 200 may be configured to receive a low voltage DC power provided by a low voltage power supply device of the electric vehicle through a low voltage auxiliary terminal A+/A- of the adapter circuitry when the adapter plug 210 is coupled to the DC charging interface, thereby supplying energy to the power adapter 200.

In an example, the low voltage power supply device of the electric vehicle may provide low voltage power supply with a voltage of 12 V, and by means of the low voltage auxiliary terminal A+/A-, the power adapter 200 may receive the low voltage power supply for internal power supply to such as the adapter controller 340 and the first switch 330. By acquiring low voltage auxiliary power supply from the vehicle, it is unnecessary to provide an additional power supply in the power adapter 200, so that the internal structure of the power adapter 200 is simplified, and the size and the weight of the power adapter 200 are further reduced.

In an example, owing to the low voltage of the low voltage auxiliary power supply, the low voltage power supply device of the electric vehicle may directly supply the low voltage DC power to the power adapter 200 without closing the first switch 330 as long as the adapter plug 210 is coupled to the DC charging interface, thus further ensuring power supply to the power adapter 200, such as the adapter controller 340 and the first switch 330.

According to some embodiments, the adapter controller 340 may be further configured to send a first message to the electric vehicle during supplying power to the electrical load such that the electric vehicle can determine whether to stop supplying the DC power to the power adapter according to the first message, wherein the first message indicates at least one of: a present output voltage, a present output current and a cumulative output power of the adapter, or a state of the locking assembly.

In an example, the first message may indicate the state of the locking assembly. For example, a particular byte or a particular bit of the first message indicates an unlocked state of the locking assembly with 0 or 00 and indicates a locked state of the locking assembly with 1 or 01. When the first message received by the electric vehicle during power supply indicates 0 or 00, it means that the locking assembly has been unlocked, so that the supply of DC power to the power adapter may be stopped.

In an example, the first message may indicate the accumulative output power, and when the first message received by the electric vehicle during power supply indicates that the accumulative output power exceeds a threshold, the supply of DC power to the power adapter 200 may be stopped.

Therefore, by means of message communication between the power adapter 200 and the electric vehicle, on the basis of the first triggering signal or the second triggering signal, the electric vehicle may further confirm, according to the message communication, whether the current conditions are suitable for discharging to the outside, which further improves the safety of discharging.

In an example, the first message may be acquired by modifying a charger's charging status (CCS) message.

According to some embodiments, the adapter controller 340 may be further configured to send a second message to the electric vehicle in response to that a failure of the power adapter 200 is detected or the adapter plug 210 is unlocked from the DC charging interface, the second message indicating that the power adapter 200 will stop supplying power to the electrical load.

In an example, the second message may be acquired by modifying a charging stop (CST) message. Moreover, the reason why the power adapter 200 will stop supplying power to the electrical load may be recorded in the second message for analysis by the electric vehicle or for the next action.

According to some embodiments, the adapter controller 340 may be further configured to:
receive from the electric vehicle a third message indicating a state of the battery pack of the electric vehicle; and
stop supplying power to the electrical load in response to determining that the state of the battery pack of the electric vehicle meets a preset condition.

In an example, the third message may be acquired by modifying an overall battery charging status (BCS) message. The third message may indicate the voltage or electric quantity of the battery pack of the electric vehicle. When determining, according to the third message, that the remaining capacity of the battery pack is 20%, the adapter controller 340 may stop supplying power to the electrical load, thus avoiding insufficient power remaining in the battery pack of the electric vehicle.

It will be appreciated that the first message, the second message, and the third message may all be transmitted between the power adapter 200 and the electric vehicle through the message interactive communication terminal S+/S- shown in FIG. 3.

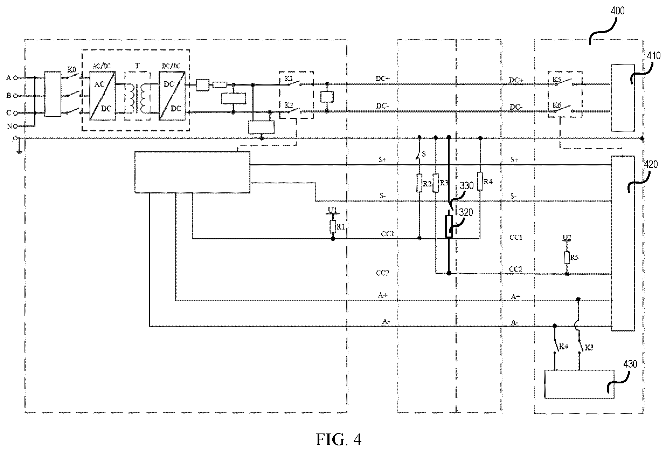

According to another aspect of the present disclosure, an electric vehicle is provided. FIG. 4 is a schematic circuitry diagram of coupling of an electric vehicle 400 to the power adapter according to an example embodiment.

The electric vehicle 400 includes: a battery pack 410; a DC charging interface for coupling the battery pack and the adapter plug 210 of the power adapter 200 described above, to supply DC power from the battery pack 410 to the adapter plug 210; and a vehicle controller 420 configured to cause the battery pack 410 to stop supplying the DC power to the power adapter 200 in response to detecting the second triggering signal.

The left side of FIG. 4 shows a schematic diagram of the adapter circuitry 300 of the power adapter 200 described above; and the right side of FIG. 4 shows a schematic circuitry diagram of the electric vehicle 400. As shown in FIG. 4, the electric vehicle 400 includes a DC charging interface for coupling the adapter plug 210, the DC charging interface including 9 terminals, namely, a DC power supply terminal DC+/DC-; an earthing terminal PE; a message interactive communication terminal S+/S-; a connection confirmation terminal CC1/CC2; and a low voltage auxiliary terminal A+/A-.

The vehicle controller 420 causes the battery pack 410 to stop supplying the DC power to the power adapter 200 in response to detecting the second triggering signal. For example, the vehicle controller 420 detects a specific voltage value or voltage variation, and the specific voltage value or voltage variation instructs the vehicle to stop supplying the DC power to the power adapter 200. In an example, the vehicle controller 420 may control a relay between the battery pack 410 and the DC power supply terminal DC+/DC- to switch off, so as to stop supplying the DC power to the power adapter 200. In an example, the vehicle controller 420 may detect the second triggering signal by detecting a voltage at a detection point U2 in FIG. 4.

Therefore, a safe and reliable power supply can be provided from the DC charging interface of the electric vehicle to the electrical load outside the vehicle. For example, the vehicle may stop providing DC power in a timely manner to avoid "arc discharge" when the adapter plug is unlocked from the DC charging interface of the vehicle.

According to some embodiments, the electric vehicle 400 may further include a low voltage power supply device 430, and the low voltage power supply device 430 may provide low voltage DC power to the power adapter 200 through the low voltage auxiliary terminal A+/A- of the DC charging interface, thereby supplying energy to the power adapter 200.

According to some embodiments, the vehicle controller 420 may be further configured to:
receive a first message from the power adapter 200 during supplying the DC power to the power adapter 200, the first message indicating at least one of: a present output voltage, a present output current and a cumulative output power of the power adapter 200, or a state of the locking assembly of the power adapter 200; and
cause the battery pack 410 to stop supplying the DC power to the power adapter 200 in response to not receiving the first message within a preset time.

Therefore, by means of message communication of the first message, the electric vehicle 400 may further confirm, based on the second triggering signal, the time to stop discharging to the outside, which further improves the safety of discharging.

According to some embodiments, the vehicle controller 420 may be further configured to:
monitor the state of the battery pack 410; and
send to the power adapter 200 a third message indicating the state of the battery pack 410, such that the power adapter 200 stops obtaining the DC power from the battery pack 410.

In an example, when the adapter controller 340 determines, according to the third message, that the remaining capacity of the battery pack is 20%, the power adapter 200 may stop obtaining the DC power from the battery pack 410, thus avoiding insufficient power remaining in the battery pack of the electric vehicle.

According to some embodiments, the vehicle controller 420 may be further configured to:
monitor the state of the battery pack 410; and
cause the battery pack 410 to stop supplying the DC power to the power adapter 200 in response to determining that the state of the battery pack 410 meets a preset condition.

In an example, when detecting that the monitored remaining capacity of the battery pack 410 is 20%, the vehicle controller 420 may directly control the relay between the battery pack 410 and the DC power supply terminal DC+/DC- to switch off, thereby stopping supplying the DC power to the power adapter 200.

According to some embodiments, the vehicle controller 420 may be further configured to send a fourth message to the power adapter 200 in response to detecting a failure of the electric vehicle 400, the fourth message indicating that the electric vehicle 400 will stop supplying power to the adapter.

In an example, the fourth message may be acquired by modifying a charging stop message of a battery management system (BST).

According to yet another aspect of the present disclosure, a method for the power adapter 200 described above is provided. The method includes the following steps:
causing the first switch 330 to close in response to that the adapter plug 210 is mechanically locked to the DC charging interface, so as to generate a first triggering signal at the connection confirmation terminal CC2, the first triggering signal to be detected by the electric vehicle to indicate a discharging mode to the electric vehicle; and
causing the first switch 330 to open when the adapter plug 210 is unlocked from the DC charging interface, so as to generate a second triggering signal at the connection confirmation terminal CC2, the second triggering signal to be detected by the electric vehicle such that the electric vehicle stops supplying the DC power to the power adapter 200.

According to still another aspect of the present disclosure, a method for the electric vehicle 400 described above is provided. The method includes: causing the battery pack 410 to stop supplying the DC power to the power adapter 200 in response to detecting the second triggering signal.

## Claims

1. A power adapter (120, 200) for converting DC power from an electric vehicle (110, 400) to AC power to supply power to an electrical load (130), the power adapter comprising:
an adapter plug (210) for coupling a DC charging interface (112) of the electric vehicle to obtain the DC power from a battery pack of the electric vehicle;
an adapter socket (220) for coupling the electrical load to supply the AC power to the electrical load;
a housing (240) defining the adapter plug and the adapter socket such that the power adapter forms an integrated structure;
a locking assembly comprising a snap-on structure (231) for mechanically locking the adapter plug to the DC charging interface when the adapter plug is coupled to the DC charging interface;
an adapter circuitry (300) electrically connected between the adapter plug and the adapter socket, the adapter circuitry comprising:
a DC-AC converter (310) configured to convert the DC power to the AC power;
a first resistor (320) and a first switch (330) connected in series between a connection confirmation terminal CC2 and a protective earthing terminal PE of the adapter circuitry; and
an adapter controller (340) configured to i) close the first switch when the adapter plug is mechanically locked to the DC charging interface to generate a first triggering signal at the connection confirmation terminal CC2, the first triggering signal to be detected by the electric vehicle to indicate a discharging mode to the electric vehicle, and to ii) open the first switch when the adapter plug is unlocked from the DC charging interface to generate a second triggering signal at the connection confirmation terminal CC2, the second triggering signal to be detected by the electric vehicle to cause the electric vehicle to stop supplying the DC power to the power adapter,
wherein the locking assembly further comprises an unlocking button (232) coupling with the snap-on structure such that the snap-on structure unlocks the adapter plug from the DC charging interface when the unlocking button is pressed, wherein the unlocking button, when pressed, causes a third triggering signal to be generated, the third triggering signal to be detected by the adapter controller to cause the adapter controller to generate a signal for opening the first switch, and
wherein the adapter controller is configured to start timing upon detection of the third triggering signal and generate a signal for opening the first switch after a preset time period.

2. The power adapter according to claim 1, wherein the snap-on structure comprises a lock pin for snapping into a lock hasp disposed at the DC charging interface of the electric vehicle, thereby realizing a locking between the adapter plug and the DC charging interface.

3. The power adapter according to claim 1 or claim 2, wherein the power adapter is configured to receive a low voltage DC power provided by a low voltage power supply device of the electric vehicle through a low voltage auxiliary terminal A+/A- of the adapter circuitry when the adapter plug is coupled to the DC charging interface, thereby supplying energy to the power adapter.

4. The power adapter according to claim 1 or claim 2, wherein the adapter controller is further configured to send a first message to the electric vehicle during supplying power to the electrical load to enable the electric vehicle to determine whether to stop supplying the DC power to the power adapter according to the first message, wherein the first message indicates at least one of a present output voltage, a present output current, a cumulative output power of the power adapter, or a state of the locking assembly.

5. The power adapter according to claim 1 or claim 2, wherein the adapter controller is further configured to send a second message to the electric vehicle in response to that a failure of the power adapter is detected or the adapter plug is unlocked from the DC charging interface, the second message indicating that the power adapter will stop supplying power to the electrical load.

6. The power adapter according to claim 1 or claim 2, wherein the adapter controller is further configured to:
receive from the electric vehicle a third message indicating a state of the battery pack of the electric vehicle; and
stop supplying power to the electrical load in response to determining that the state of the battery pack of the electric vehicle meets a preset condition.

7. A system including a power adapter (120,200) according to any one of claims 1 to 6, an electric vehicle (110, 400) comprising:
a battery pack (410);
a DC charging interface (112) for coupling the battery pack and the adapter plug (210) of the power adapter (120, 200) to supply DC power from the battery pack to the adapter plug; and
a vehicle controller (420) configured to cause the battery pack to stop supplying the DC power to the power adapter in response to that the second triggering signal is detected.

8. The system according to claim 7, wherein the vehicle controller is further configured to:
receive a first message from the power adapter during supplying the DC power to the power adapter, the first message indicating at least one of a present output voltage, a present output current, a cumulative output power of the power adapter, or a state of the locking assembly; and
cause the battery pack to stop supplying the DC power to the power adapter in response to that the first message is not received within a preset time.

9. The system according to claim 7, wherein the vehicle controller is further configured to:
monitor a state of the battery pack; and
send a third message indicating the state of the battery pack to the power adapter, such that the power adapter stops obtaining the DC power from the battery pack.

10. The system according to claim 7, wherein the vehicle controller is further configured to:
monitor a state of the battery pack; and
cause the battery pack to stop supplying the DC power to the power adapter in response to determining that the state of the battery pack meets a preset condition.

11. The system according to claim 7, wherein the vehicle controller is further configured to send a fourth message to the power adapter in response to that a failure of the electric vehicle is detected, the fourth message indicating that the electric vehicle will stop supplying power to the power adapter.

12. A method for the power adapter (120, 200) according to any of claims 1 to 6, the method comprising:
causing the first switch (330) to close in response to that the adapter plug (210) is mechanically locked to the DC charging interface (112), to generate a first triggering signal at the connection confirmation terminal CC2, the first triggering signal to be detected by the electric vehicle (110, 400) to indicate a discharging mode to the electric vehicle; and
causing the first switch to open when the adapter plug is unlocked from the DC charging interface, to generate a second triggering signal at the connection confirmation terminal CC2, the second triggering signal to be detected by the electric vehicle to cause the electric vehicle to stop supplying the DC power to the power adapter.

13. A method for the system according to any of claims 7 to 11, the method comprising:
causing the battery pack (410) to stop supplying the DC power to the power adaptor (120, 200) in response to that the second triggering signal is detected.

## Patentansprüche

1. Leistungsadapter (120, 200) zum Umwandeln von Gleichstrom aus einem Fahrzeug (110, 400) in Wechselstrom, um Strom an eine elektrische Last zu führen (130), wobei der Leistungsadapter Folgendes umfasst:
einen Adapterstecker (210) zum Anschluss einer Gleichstrom-Ladeschnittstelle (112) des Elektrofahrzeugs, um Gleichstrom aus einem Batteriesatz des Elektrofahrzeugs zu erhalten;
eine Adapterbuchse (220) zum Anschluss des elektrischen Verbrauchers, um Wechselstrom an den Verbraucher zu führen;
ein Gehäuse (240), das den Adapterstecker und die Adapterbuchse so umschließt, dass der Leistungsadapter eine einheitliche Struktur bildet;
eine Verriegelungsvorrichtung, die eine Einraststruktur (231) umfasst, um den Adapterstecker mechanisch an der Gleichstrom-Ladeschnittstelle zu verriegeln, wenn der Adapterstecker mit der Gleichstrom-Ladeschnittstelle verbunden ist;
eine Adapterschaltung (300), die elektrisch zwischen dem Adapterstecker und der Adapterbuchse angeschlossen ist, wobei die Adapterschaltung Folgendes umfasst:
einen Gleichstrom-Wechselstrom-Wandler (310), der dafür ausgebildet ist, den Gleichstrom in Wechselstrom umzuwandeln;
einen ersten Widerstand (320) und einen ersten Schalter (330), die in Reihe zwischen einem Verbindungsbestätigungsanschluss CC2 und einem Schutzerdungsanschluss PE der Adapterschaltung geschaltet sind; und
eine Adaptersteuerung (340), die ausgebildet ist, um i) den ersten Schalter zu schließen, wenn der Adapterstecker mechanisch an der Gleichstrom-Ladeschnittstelle verriegelt ist, um ein erstes Auslösesignal am Verbindungsbestätigungsanschluss CC2 zu erzeugen, wobei das erste Auslösesignal vom Elektrofahrzeug erkannt wird, um dem Elektrofahrzeug einen Entlademodus anzuzeigen, und dazu ausgelegt ist, ii) den ersten Schalter zu öffnen, wenn der Adapterstecker von der Gleichstrom-Ladeschnittstelle entriegelt wird, um ein zweites Auslösesignal am Verbindungsbestätigungsanschluss CC2 zu erzeugen, wobei das zweite Auslösesignal vom Elektrofahrzeug erkannt wird, um das Elektrofahrzeug dazu zu veranlassen, die Gleichstromversorgung des Leistungsadapters anzuhalten,
wobei die Verriegelungsvorrichtung ferner einen Entriegelungsknopf (232) umfasst, der mit der Einraststruktur derart gekoppelt ist, dass die Einraststruktur den Adapterstecker von der Gleichstrom-Ladeschnittstelle entriegelt, wenn der Entriegelungsknopf gedrückt wird, wobei der Entriegelungsknopf beim Drücken die Erzeugung eines dritten Auslösesignals bewirkt, wobei das dritte Auslösesignal von der Adaptersteuerung erkannt wird, um die Adaptersteuerung dazu zu veranlassen, ein Signal zum Öffnen des ersten Schalters zu erzeugen, und
wobei die Adaptersteuerung für die Zeitmessung ausgebildet ist, wenn das dritte Auslösesignal erkannt wird, und nach Ablauf einer voreingestellten Zeitspanne ein Signal zum Öffnen des ersten Schalters erzeugt.

2. Leistungsadapter nach Anspruch 1, wobei die Einraststruktur einen Verriegelungsstift umfasst, der in einen an der Gleichstrom-Ladeschnittstelle des Elektrofahrzeugs angeordneten Verriegelungsbügel einrastet, wodurch eine Verriegelung zwischen dem Adapterstecker und der Gleichstrom-Ladeschnittstelle hergestellt wird.

3. Leistungsadapter nach Anspruch 1 oder Anspruch 2, wobei der Leistungsadapter dafür ausgebildet ist, eine von einer Niederspannungs-Stromversorgungsvorrichtung des Elektrofahrzeugs bereitgestellte Niederspannungs-Gleichstromversorgung über einen Niederspannungs-Hilfsanschluss A+/A- der Adapterschaltung zu empfangen, wenn der Adapterstecker mit der Gleichstrom-Ladeschnittstelle verbunden ist, wodurch Energie dem Leistungsadapter zugeführt wird.

4. Leistungsadapter nach Anspruch 1 oder Anspruch 2, wobei die Adaptersteuerung ferner so ausgebildet ist, dass sie während der Stromversorgung der elektrischen Last eine erste Nachricht an das Elektrofahrzeug sendet, um es dem Elektrofahrzeug zu ermöglichen, anhand der ersten Nachricht zu bestimmen, ob die Gleichstromversorgung des Leistungsadapters angehalten werden soll, wobei die erste Nachricht mindestens einen der folgenden Werte anzeigt: eine aktuelle Ausgangsspannung, einen aktuellen Ausgangsstrom, eine kumulative Ausgangsleistung des Leistungsadapters oder einen Zustand der Verriegelungsvorrichtung.

5. Leistungsadapter nach Anspruch 1 oder Anspruch 2, wobei die Adaptersteuerung ferner so ausgebildet ist, dass sie eine zweite Nachricht an das Elektrofahrzeug sendet, wenn ein Ausfall des Leistungsadapters erkannt wird oder der Adapterstecker aus der Gleichstrom-Ladeschnittstelle entriegelt wird, wobei die zweite Nachricht anzeigt, dass der Leistungsadapter die Stromversorgung der elektrischen Last anhalten wird.

6. Leistungsadapter nach Anspruch 1 oder Anspruch 2, wobei die Adaptersteuerung ferner für Folgendes ausgebildet ist:
Empfangen einer dritten Nachricht vom Elektrofahrzeug, die einen Zustand des Batteriesatzes des Elektrofahrzeugs anzeigt; und
Anhalten der Stromzufuhr zur elektrischen Last, sobald bestimmt wird, dass der Zustand des Batteriesatzes des Elektrofahrzeugs eine voreingestellte Bedingung erfüllt.

7. System, das einen Leistungsadapter (120, 200) nach einem der Ansprüche 1 bis 6 sowie ein Elektrofahrzeug (110, 400) aufweist, das Folgendes umfasst:
einen Batteriesatz (410);
eine Gleichstrom-Ladeschnittstelle (112) zum Verbinden des Batteriesatzes mit dem Adapterstecker (210) des Leistungsadapters (120, 200), um Gleichstrom aus dem Batteriesatz an den Adapterstecker zu leiten; und
eine Fahrzeugsteuerung (420), die dafür ausgebildet ist zu veranlassen, dass der Batteriesatz die Gleichstromversorgung des Leistungsadapters anhält, sobald das zweite Auslösesignal erkannt wird.

8. System nach Anspruch 7, wobei die Fahrzeugsteuerung ferner für Folgendes ausgebildet ist:
Empfangen einer ersten Nachricht vom Leistungsadapter, während dieser mit Gleichstrom versorgt wird, wobei die erste Nachricht mindestens einen der folgenden Werte anzeigt: die aktuelle Ausgangsspannung, den aktuellen Ausgangsstrom, die kumulierte Ausgangsleistung des Leistungsadapters oder den Zustand der Verriegelungsvorrichtung; und
Veranlassen, dass der Batteriesatz die Gleichstromversorgung des Leistungsadapters anhält, wenn die erste Nachricht nicht innerhalb einer vorgegebenen Zeit empfangen wird.

9. System nach Anspruch 7, wobei die Fahrzeugsteuerung ferner für Folgendes ausgebildet ist:
Überwachen des Zustands des Batteriesatzes; und
Senden einer dritten Nachricht, die den Zustand des Batteriesatzes am Leistungsadapter anzeigt, so dass der Leistungsadapter die Gleichstromversorgung vom Batteriesatz nicht mehr erhält.

10. System nach Anspruch 7, wobei die Fahrzeugsteuerung ferner für Folgendes ausgebildet ist:
Überwachen des Zustands des Batteriesatzes; und
Veranlassen, dass der Batteriesatz die Gleichstromversorgung des Leistungsadapters abbricht, sobald bestimmt wird, dass der Zustand des Batteriesatzes eine voreingestellte Bedingung erfüllt.

11. System nach Anspruch 7, wobei die Fahrzeugsteuerung ferner so ausgebildet ist, dass sie als Reaktion auf die Erkennung einer Störung des Elektrofahrzeugs eine vierte Nachricht an den Leistungsadapter sendet, wobei die vierte Nachricht anzeigt, dass das Elektrofahrzeug die Stromversorgung des Leistungsadapters anhalten wird.

12. Verfahren für den Leistungsadapter (120, 200) nach einem der Ansprüche 1 bis 6, wobei das Verfahren Folgendes umfasst:
Veranlassen des ersten Schalters (330) zum Schließen als Reaktion darauf, dass der Adapterstecker (210) mechanisch an der Gleichstrom-Ladeschnittstelle (112) verriegelt ist, um ein erstes Auslösesignal an dem Verbindungsbestätigungsanschluss CC2 zu erzeugen, wobei das erste Auslösesignal vom Fahrzeug (110, 400) erkannt wird, um dem Fahrzeug einen Entlademodus anzuzeigen; und Veranlassen des ersten Schalters zum Öffnen, wenn der Adapterstecker von der Gleichstrom-Ladeschnittstelle entriegelt wird, um ein zweites Auslösesignal am Verbindungsbestätigungsanschluss CC2 zu erzeugen, wobei das zweite Auslösesignal vom Fahrzeug erkannt wird, um das Fahrzeug dazu zu veranlassen, die Gleichstromversorgung des Leistungsadapters anzuhalten.

13. Verfahren für das System nach einem der Ansprüche 7 bis 11, wobei das Verfahren Folgendes umfasst:
Veranlassen des Batteriesatzes (410) die Gleichstromversorgung des Leistungsadapters (120, 200) anzuhalten als Reaktion darauf, dass das zweite Auslösesignal erkannt wird.

## Revendications

1. Adaptateur d'alimentation électrique (120, 200) pour convertir l'alimentation électrique continue DC d'un véhicule électrique (110, 400) en alimentation électrique alternative AC pour alimenter en énergie une charge électrique (130), l'adaptateur d'alimentation électrique comprenant :
une fiche d'adaptateur (210) pour coupler une interface de charge en courant continu DC (112) du véhicule électrique afin d'obtenir l'énergie en courant continu DC depuis un bloc-batterie du véhicule électrique ;
une prise d'adaptateur (220) pour coupler la charge électrique afin d'alimenter en courant alternatif AC la charge électrique ;
un boîtier (240) définissant la fiche d'adaptateur et la prise d'adaptateur de telle sorte que l'adaptateur d'alimentation électrique forme une structure intégrée ;
un ensemble de verrouillage comprenant une structure d'encliquetage (231) pour verrouiller mécaniquement la fiche d'adaptateur à l'interface de charge en courant continu DC lorsque la fiche d'adaptateur est couplée à l'interface de charge en courant continu DC ;
des circuits d'adaptateur (300) connectés électriquement entre la fiche d'adaptateur et la prise d'adaptateur, les circuits d'adaptateur comprenant :
un convertisseur DC-AC (310) configuré pour convertir l'énergie électrique continue DC en énergie électrique alternative AC ;
une première résistance (320) et un premier commutateur (330) connectés en série entre une borne de confirmation de connexion CC2 et une borne de mise à la terre de protection PE des circuits d'adaptateur ; et
un contrôleur d'adaptateur (340) configuré pour i) fermer le premier interrupteur lorsque la fiche d'adaptateur est mécaniquement verrouillée à l'interface de charge en courant continu DC pour générer un premier signal de déclenchement au niveau de la borne de confirmation de connexion CC2, le premier signal de déclenchement étant détecté par le véhicule électrique pour indiquer un mode de décharge au véhicule électrique, et à ii) ouvrir le premier interrupteur lorsque la fiche de l'adaptateur est déverrouillée de l'interface de charge en courant continu DC pour générer un deuxième signal de déclenchement au niveau de la borne de confirmation de connexion CC2, le deuxième signal de déclenchement étant détecté par le véhicule électrique pour provoquer l'arrêt de l'alimentation en courant continu DC par le véhicule électrique vers l'adaptateur d'alimentation électrique,
où l'ensemble de verrouillage comprend en outre un bouton de déverrouillage (232) couplé à la structure encliquetable de sorte que la structure encliquetable déverrouille la fiche d'adaptateur de l'interface de charge en courant continu DC lorsque le bouton de déverrouillage est enfoncé, où le bouton de déverrouillage, lorsqu'il est enfoncé, provoque la génération d'un troisième signal de déclenchement, le troisième signal de déclenchement étant détecté par le contrôleur d'adaptateur pour provoquer la génération d'un signal, par le contrôleur d'adaptateur, pour l'ouverture du premier commutateur, et
où le contrôleur d'adaptateur est configuré pour démarrer la mesure du temps lors de la détection du troisième signal de déclenchement et générer un signal pour ouvrir le premier commutateur après une période de temps prédéterminée.

2. Adaptateur d'alimentation électrique selon la revendication 1, dans lequel la structure encliquetable comprend une broche de verrouillage destinée à s'encliqueter dans une gâche de verrouillage disposée au niveau de l'interface de charge en courant continu du véhicule électrique, réalisant ainsi un verrouillage entre la fiche d'adaptateur et l'interface de charge en courant continu.

3. Adaptateur d'alimentation électrique selon la revendication 1 ou la revendication 2, dans lequel l'adaptateur d'alimentation électrique est configuré pour recevoir une puissance basse tension continue DC fournie par un dispositif d'alimentation électrique basse tension du véhicule électrique par l'intermédiaire d'une borne auxiliaire basse tension A+/A- des circuits d'adaptateur lorsque la fiche d'adaptateur est couplée à l'interface de charge DC, fournissant ainsi de l'énergie à l'adaptateur d'alimentation électrique.

4. Adaptateur d'alimentation électrique selon la revendication 1 ou la revendication 2, dans lequel le contrôleur d'adaptateur est en outre configuré pour envoyer un premier message au véhicule électrique pendant l'alimentation en énergie de la charge électrique afin de permettre au véhicule électrique de déterminer s'il faut arrêter de fournir l'énergie continue à l'adaptateur d'alimentation électrique conformément au premier message, le premier message indiquant au moins l'un parmi : une tension de sortie présente, un courant de sortie présent, une puissance de sortie cumulée de l'adaptateur d'alimentation électrique ou un état de l'ensemble de verrouillage.

5. Adaptateur d'alimentation électrique selon la revendication 1 ou la revendication 2, dans lequel le contrôleur d'adaptateur est en outre configuré pour envoyer un deuxième message au véhicule électrique en réponse au fait qu'une défaillance de l'adaptateur d'alimentation électrique est détectée ou que la fiche de l'adaptateur est déverrouillée de l'interface de charge en courant continu, le deuxième message indiquant que l'adaptateur d'alimentation électrique va s'arrêter de fournir de l'énergie électrique à la charge électrique.

6. Adaptateur d'alimentation électrique selon la revendication 1 ou la revendication 2, dans lequel le contrôleur d'adaptateur est en outre configuré pour :
recevoir du véhicule électrique un troisième message indiquant un état du bloc-batterie du véhicule électrique ; et
cesser d'alimenter la charge électrique en réponse à la détermination que l'état du bloc-batterie du véhicule électrique satisfait une condition prédéterminée.

7. Système comprenant un adaptateur d'alimentation électrique (120, 200) selon l'une quelconque des revendications 1 à 6, un véhicule électrique (110, 400) comprenant :
un bloc-batterie (410) ;
une interface de chargement en courant continu DC (112) permettant de coupler le bloc-batterie et la fiche d'adaptateur (210) de l'adaptateur d'alimentation électrique (120, 200) pour alimenter de l'énergie DC du bloc-batterie à la fiche d'adaptateur ; et
un contrôleur de véhicule (420) configuré pour amener le bloc-batterie à arrêter de fournir l'alimentation en courant continu DC à l'adaptateur d'alimentation électrique en réponse à la détection du deuxième signal de déclenchement.

8. Système selon la revendication 7, dans lequel le contrôleur de véhicule est en outre configuré pour :
recevoir un premier message de l'adaptateur d'alimentation électrique pendant l'alimentation en courant continu DC vers l'adaptateur d'alimentation électrique, le premier message indiquant au moins l'un parmi : une tension de sortie présente, un courant de sortie présent, une puissance de sortie cumulée de l'adaptateur d'alimentation électrique ou un état de l'ensemble de verrouillage ; et
empêcher le bloc-batterie de fournir l'alimentation électrique DC à l'adaptateur d'alimentation électrique en réponse au fait que le premier message n'est pas reçu dans un délai prédéfini.

9. Système selon la revendication 7, dans lequel le contrôleur de véhicule est en outre configuré pour :
surveiller l'état du bloc-batterie ; et
envoyer un troisième message indiquant l'état du bloc-batterie à l'adaptateur d'alimentation électrique, de sorte que l'adaptateur d'alimentation électrique cesse d'obtenir l'alimentation en courant continu DC depuis le bloc-batterie.

10. Système selon la revendication 7, dans lequel le contrôleur de véhicule est en outre configuré pour :
surveiller l'état du bloc-batterie ; et
empêcher le bloc-batterie de fournir l'alimentation électrique DC à l'adaptateur d'alimentation électrique en réponse à la détermination que l'état du bloc-batterie satisfait une condition prédéfinie.

11. Système selon la revendication 7, dans lequel le contrôleur de véhicule est en outre configuré pour envoyer un quatrième message à l'adaptateur d'alimentation électrique en réponse au fait qu'une défaillance du véhicule électrique est détectée, le quatrième message indiquant que le véhicule électrique va s'arrêter de fournir de l'énergie électrique à la charge électrique.

12. Procédé pour l'adaptateur d'alimentation électrique (120, 200) selon l'une quelconque des revendications 1 à 6, le procédé comprenant les étapes suivantes :
provoquer la fermeture du premier commutateur (330) en réponse au verrouillage mécanique de la fiche d'adaptateur (210) sur l'interface de charge DC (112), pour générer un premier signal de déclenchement au niveau de la borne de confirmation de connexion CC2, le premier signal de déclenchement étant détecté par le véhicule électrique (110, 400) pour indiquer un mode de décharge au véhicule électrique ; et
provoquer l'ouverture du premier commutateur lorsque la fiche d'adaptateur est déverrouillée de l'interface de charge DC, pour générer un deuxième signal de déclenchement au niveau de la borne de confirmation de connexion CC2, le deuxième signal de déclenchement étant détecté par le véhicule électrique pour provoquer l'arrêt de l'alimentation électrique DC du véhicule électrique vers l'adaptateur secteur.

13. Procédé pour le système selon l'une quelconque des revendications 7 à 11, le procédé comprenant l'étape suivante :
provoquer l'arrêt, par le bloc-batterie (410), de l'alimentation électrique DC vers l'adaptateur d'alimentation électrique (120, 200) en réponse à la détection du deuxième signal de déclenchement.
